(19) **Europäisches Patentamt**

**European Patent Office**

**Office européen des brevets**

(11) Veröffentlichungsnummer: **0 119 624**
A2

(12) # EUROPÄISCHE PATENTANMELDUNG

(21) Anmeldenummer: **84103004.2**

(22) Anmeldetag: **19.03.84**

(51) Int. Cl.³: **B 60 R 25/00**

---

(30) Priorität: **21.03.83 DE 8308255 U**

(43) Veröffentlichungstag der Anmeldung: **26.09.84**
**Patentblatt 84/39**

(84) Benannte Vertragsstaaten: **AT BE CH DE FR GB IT LI LU NL SE**

(71) Anmelder: **Rial Leichtmetallfelgen GmbH, Daimlerstrasse 45/53, D-6802 Ladenburg (DE)**

(72) Erfinder: **Früh, Wolfgang, Daimlerstrasse 45/53, D-6802 Ladenburg (DE)**

(74) Vertreter: **Seibert, Rudolf, Dipl.-Ing., Tattenbachstrasse 9, D-8000 München 22 (DE)**

---

(54) **Abschliessbare Radfelge.**

(57) Die Erfindung bezieht sich auf eine Radfelge, insbesondere aus Leichtmetall mit einer ein unbefugtes Lösen der Radmuttern verhindernden, in die Radschlüssel formschlüssig einsetzbaren und dort verriegelbaren, insbesondere verschliessbaren Abdeckplatte.

Gemäss der Erfindung wird auf der Innenseite der Abdeckplatte ein in deren Rändern geführtes Spreizteil vorgesehen, das in der Mitte der Abdeckplatte an einem in die Abdeckplatte versenkbaren und im versenkten Zustand verriegelbaren Knopf derart befestigt ist, dass beim Versenken die Räder des Spreizteiles in Nuten in der Radschüssel über den Rand der Abdeckplatte hinaus gedrückt werden.

ACTORUM AG

## "Abschließbare Radfelge"

Die vorliegende Neuerung bezieht sich auf eine Radfelge, und zwar insbesondere eine Leichtmetallfelge, mit einer ein unbefugtes Lösen der Radmuttern verhindernden, in die Radschüssel formschlüssig einsetzbaren und dort verriegelbaren Abdeckplatte.

Insbesondere hochwertige Leichtmetallfelgen, aber auch mit teueren Reifen versehene einfache Stahlfelgen werden oft entwendet, wobei nicht nur der Wert der Felge zusammen mit dem Wert des Reifens abhanden kommt, sondern vielfach die Fahrzeuge auch stark beschädigt werden, da das Entwenden im allgemeinen unsachgemäß erfolgt.

Es ist schon bekannt geworden, einzelne Radmuttern gegen unbefugtes Entfernen zu sichern. Diese Maßnahme hat den Nachteil, daß in vielen Fällen dann die anderen Schrauben gelockert werden, wodurch eine erhöhte Unfallgefahr bei Benutzung des Fahrzeuges gegeben ist.

Es sind auch schon Radfelgen auf dem Markt, bei denen die Radmuttern mit Hilfe einer verriegelbaren Abdeckplatte so abgedeckt werden, daß nur nach Entfernen der Abdeckplatte, die im allgemeinen mit einer Sonderverriegelung oder sogar einem Zylinderschloß gesichert wird, ein Lösen der Radmuttern möglich ist.

Aufgabe der vorliegenden Erfindung ist es, eine derartige Konstruktion so weiter zu bilden, daß bei einfachster Konstruktion eine gute Sicherung gegen unbefugtes Entfernen, selbst mit Spezialwerkzeugen, gegeben ist. Darüberhinaus soll die Konstruktion so sein, daß bei Aufsetzen der Abdeckplatte das zunächst montierte Rad nicht erneut ausgewuchtet werden muß, weil beispielsweise die Sicherungen unsymmetrisch, also beispielsweise seitlich an der Abdeckplatte angebracht sind.

Diese Aufgabe wird mit einer Radfelge mit den Merkmalen des Schutzanspruches 1 gelöst.

Vorteilhafte Ausgestaltungsmöglichkeiten ergeben sich aus den Unteransprüchen.

Bei der Radfelge nach der Erfindung wird also ein Spreizteil, vorzugsweise in Form einer sich durchbiegenden Blattfeder vorgesehen, das über einen verriegelbaren Knopf in der Mitte der Abdeckplatte, beispielsweise in Form eines im eingesteckten Zustand verriegelbaren Zylinderschlosses so gespreizt wird, daß die freien Enden in entsprechende Nuten der Radschüsseln eingreifen und dadurch ein unbefugtes Entfernen der Abdeckplatte sicher verhindern.

Einzelheiten einer Radfelge nach der Erfindung werden im folgenden in Verbindung mit der anliegenden Zeichnung erläutert.

In dieser Zeichnung zeigen:

Fig. 1    eine teilweise Draufsicht auf ein Kfz-Rad mit aufgesetzter Abdeckplatte mit den Merkmalen nach der Erfindung,

Fig. 2    eine Schnittdarstellung längs der Linie II – II in Fig. 1, bei eingesetzter und verriegelter Abdeckplatte und

Fig. 3    eine Ansicht entsprechend Fig. 2 bei entriegelter, aber in die Öffnung der Radschüssel eingesetzter Abdeckplatte.

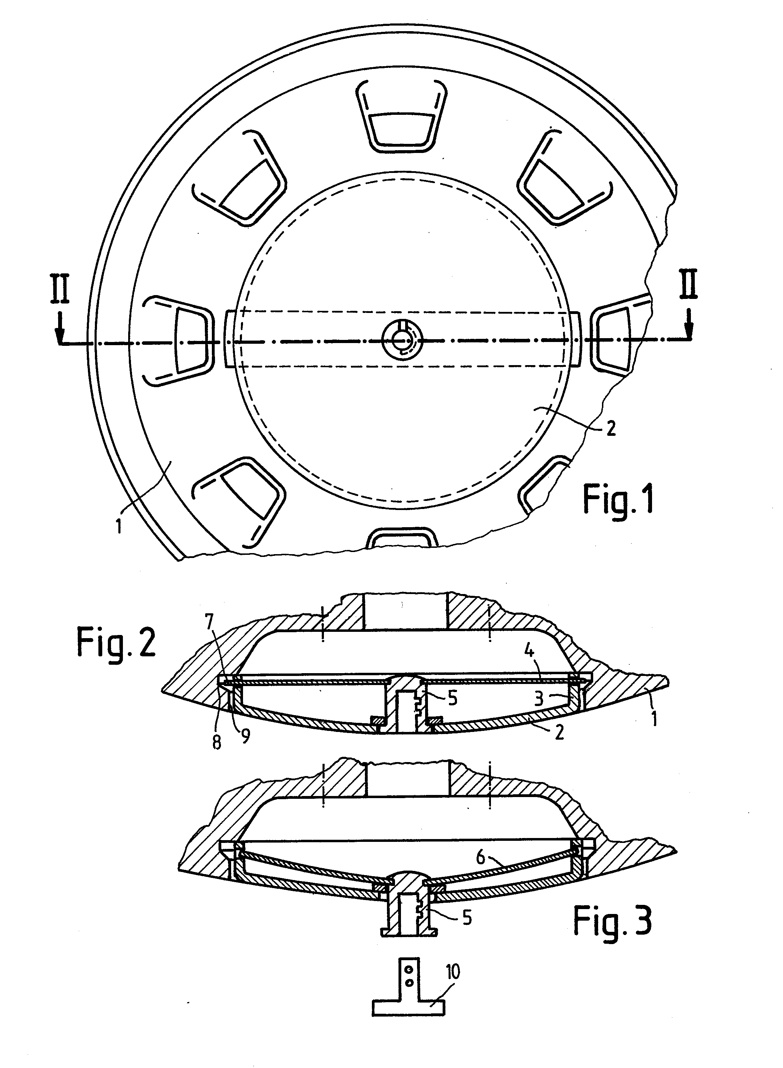

Im einzelnen ist in den Fign. mit 1 eine beliebig zu formende Radschüssel bezeichnet. Diese Radschüssel trägt im Bereich der Befestigungsschrauben, die nur in Form gestrichelter Linien in Fig. 2 angedeutet sind, eine zylinderförmige Ausnehmung 9, hinter der eine Nut 8 eingefräst ist.

Eine Abdeckplatte 2 greift mit ihrem Rand 3 formschlüssig in diese Ausnehmung 9 ein.

Innerhalb der Abdeckplatte 2 ist eine Blattfeder 4 als Spreizteil vorgesehen und wird in Durchbrechungen des Randes 3 der Abdeckplatte 2 geführt. In der Mitte ist die Blattfeder 4 an dem Ende eines knopfartigen Zylinderschlosses 5 befestigt.

Wie aus den Fign. 2 und 3 anschaulich zu ersehen, wird durch Hineindrücken des Zylinderschlosses 5 in die Abdeckplatte die Blattfeder 4 durchgebogen, so daß sie mit ihren Rändern 7 in die Nut 8 der Radschüssel eingreift. Sie hält damit die Abdeckplatte 2 in der Ausnehmung. In dieser Stellung kann das Zylinderschloß mit einem Spezialschlüssel 10 verriegelt werden.

Funktion und mögliche Abwandlungen ergeben sich für den auf dem Gebiet tätigen Fachmann von selbst. Im besonderen sind bewußt in den einzelnen Fign. keinerlei ein mögliches Spiel der Abdeckplatte in der Ausnehmung der Radschüssel verhindernde elastische Dichtungsstreifen eingezeichnet, um die Übersichtlichkeit nicht in Frage zu stellen.

Es sei noch angemerkt, daß anstelle einer Blattfeder natürlich auch zwei einfache am Schloß 5 anzulenkende Schieberiegel oder dergleichen vorgesehen werden können, die beim Eindrücken des Zylinderschlosses 5 dann mit ihrem freien Ende in die Nuten der Radschüssel eingreifen.

"Abschließbare Radfelge"

Patentansprüche

1. Radfelge, insbesondere Leichtmetallfelge, mit einer ein unbefugtes Lösen der Radmuttern verhindernden, in die Radschüssel formschlüssig einsetzbaren und dort verriegelbaren Abdeckplatte, dadurch gekennzeichnet, daß auf der Innenseite der Abdeckplatte (2) ein in deren Rändern (3) geführtes Spreizteil (4) vorgesehen ist, das in der Mitte der Abdeckplatte an einem in die Abdeckplatte (2) versenkbaren und im versenkten Zustand verriegelbaren Knopf (5) derart befestigt ist, daß beim Versenken die Ränder (7) des Spreizteiles (4) in Nuten (8) in der Radschüssel (1) gedrückt werden.

2. Radfelge nach Anspruch 1, dadurch gekennzeichnet, daß das Spreizteil (4) blattfederartig geformt und in der Abdeckplatte (2) so geführt ist, daß seine Enden bei durch den Verriegelungsknopf (5) verursachtem Strecken in die Nuten der Radschüssel geschoben werden.

3. Radfelge nach Anspruch 1 oder 2, dadurch gekennzeichnet, daß der Verriegelungsknopf mit einem im eingedrückten Zustand verriegelbaren Zylinderschloß kombiniert ist.

0119624

1/1

Fig.1

Fig.2

Fig.3

10